# EUROPEAN PATENT APPLICATION

(11) **EP 3 916 687 A1**
(43) Date of publication of application: **01.12.2021**
(21) Application number: 20382458.6
(22) Date of filing: 28.05.2020
(51) Int. Cl.: G07C 9/37, G06F 21/32, G06F 21/33

(54) **METHOD AND SYSTEM FOR CONDITIONAL ACCESS**

(71) Applicant: Morteo Appierto, Luciana, 50014 Zaragoza (ES)
(72) Inventor: Morteo Viggiano, Diego, 50014 Zaragoza (ES)
(74) Representative: Isern Patentes y Marcas S.L.

(57) **Abstract**

The method takes control biometric data of the user (10), at the time of the intended access, and verifies that it corresponds to biometric reference data of the user (10), of the same type as the control biometric data, and captured once a trusted third party has certified that the user (10) verifies a certain condition, which coincides with the condition of the intended access to a good, service or establishment. The system (1) comprises a first memory (3) that houses the biometric reference data; capture means (4, 5) for capturing the control biometric data; and a processing unit (7), in communication with the first memory (3) and with the capture means (4, 5), for carrying out the verification. It enables the conditional access to be managed without employing specialized personnel and without having to manage, at the time of the intended access, databases with confidential data.

## Description

### Technical field of the invention

The present invention relates to a method and a system for verifying whether a user meets a certain requirement required to access a good, service or place, by comparing a biometric data of the user, which is previously certified as meeting a certain condition, with a biometric data obtained at the time of access, and more specifically, a method and a system for controlling the autonomous access of a user, without the intermediation of another person.

### Background of the invention

Currently, many authentication systems are known that enable access to a good or service, or to a place, to be controlled, which for various reasons is restricted to a certain user or group of users who must meet a predetermined condition. For example, in some cases, the law does not allow access to the good or service to minors, while in other cases, access to the good or service is subject to the user fulfilling a condition, for example, that they are subscribed to a service.

Currently, tobacco vending machines, where only people of legal age can purchase goods, are located inside a public place, and they are manually activated by a person in charge from among the employees of the premises by means of a remote control. Thus, the responsibility of verifying if the user who wants to buy tobacco is of legal age falls to the person in charge who operates the remote control.

In addition to causing unnecessary waiting times for the purchase of products, and distracting employees from their usual functions, verifying if the user meets the necessary requirements to be eligible for access raises other legal problems, since employees of the premises are generally not qualified to verify the requirements, nor do they have the necessary authority; furthermore, having an employee with the necessary authority and training with the sole function of verifying the identity of a user would not be economically viable.

A possible alternative is for the user to register their data in a database of the entity that provides the protected good or service, but given the growing awareness of data protection, legal restrictions and possible vulnerabilities that expose confidential data of the user, this option is less attractive and poses problems rather than solutions.

### Description of the invention

The present invention proposes a solution to the aforementioned problems by means of a method and system for the conditional access control of a user, as defined in the independent claims.

The invention is based on what is referred to as a "trusted third party". The trusted third party is a certifying entity that issues a digital certificate, according to which it is certified, after having carried out appropriate verifications, that the user (identified in some way, either through official identity data, such as name and surname(s), or identity or passport number, or alternatively, by means of unofficial data (such as a user code or an alias) verifies a predetermined condition, for example, being of legal age.

Prior to the intended access, reference biometric data has been taken from the user, which can be associated with the user, that is, it allows the user to be identified, and which can be saved in a first memory, preferably in the possession of the user. The reference biometric data may be, for example, of the type of a fingerprint, iris pattern, facial image, etc.

At the time at which the user, once certified, intends to access a certain service, good, or establishment, for which compliance with the same condition as previously mentioned, that appears in the certificate, is required, the user only has to take again, at the time of the intended access, user's control biometric data, using capture means, these control biometric data being associated with the reference biometric data, that is, they are of the same type (both are fingerprints, both are iris patterns, etc.) The control biometric data can preferably be saved in a second memory. The first memory can preferably be non-volatile, while the second memory is preferably volatile.

By means of a processing unit that has access to the reference and the control biometric data, for example to the first memory and the second memory, a verification is carried out as to whether the control biometric data coincides with the reference biometric data, that is, it is verified whether the control biometric data corresponds at least in part to the reference biometric data. This means verifying whether they correspond to the same individual. In the verification, certain characteristics of the compared biometric data are evaluated and it is determined whether, according to the pre-established criteria in a verification program, there is a sufficient correspondence to confirm that the data coincides, within a margin of error. Preferably, it is determined that the data coincide when they have a degree of mutual correspondence greater than a predetermined threshold value, which may depend on the type of data. If the comparison is positive, i.e., if there is sufficient correspondence, access is granted; otherwise, access is denied.

Throughout the present document, biometric data or biometric information will be understood as referring to data that is related to, or based on, one or more unique physical features of the user, in such a way that they allow the user to be identified based thereon, such as fingerprints, iris pattern, facial structure, etc. This biometric data is preferably stored and processed digitally, but can also be stored and processed in other ways, for example, with analogue systems. Preferably, the reference and the control biometric data is the fingerprint data of the user. This type of data is comparatively easy to obtain and benefits from a wide range of fingerprint reading technology. In another embodiment, the biometric data is physiognomic data, which can be read by a camera configured to perform facial recognition. Fingerprint data and physiognomic data can be used in combination with a suitable processor.

As stated above, one condition may be to be of legal age. In this manner, access control can be, for example, for a tobacco vending machine, for an establishment wherein alcoholic beverages are served, for a bookmaker, for a website for gambling or with sexual content, etc. Another condition may be, for example, being registered as a member of a large family, wherein access control may refer to, for example, a discount on certain items or services. Another condition may be forming part of a group of members or customers of a certain entity, meaning that access may refer to being able to attend certain meetings, or visit websites with offers, etc.

By means of the present invention, access or denial of access is managed depending on whether or not the required condition is respectively met, without the need for a person with authority to intervene at the time of the access request in order to confirm compliance of the requirement by means of identity validation, or the inclusion of confidential information in a database.

The certifying entity that certifies that the user meets certain conditions may be a governmental entity, such as the Police (or any other governmental entity), although the certifying entity can preferably also be a non-governmental entity, such as a private company, which provides certification services.

Both in the case of a governmental entity and in the case of a non-governmental entity, certification can occur in different ways. According to a first example, the certifying entity can hold a face-to-face identification of the user, and a subsequent verification that the identified user meets a certain condition. For example, to verify whether the user meets the condition of being of legal age, the certifying entity can arrange a face-to-face interview with the user, wherein, for example, through the user's ID card, it verifies that said user is the same person that appears on the identity document, and verifies, through the identity document, that the person is of legal age. In accordance with another alternative example, the user can prove their identity and compliance with the condition to the certifying entity remotely, such as by video conference, providing copies of identity documents, photographs and, in general, any personal information that enables the certifying entity to identify them and determine that the user meets the condition.

Regarding the issuance of the certification, the certifying entity can, for example, take the reference biometric data and issue the digital certificate, which contains the reference biometric data and certifies that the user owner of said biometric data meets the evaluated condition. Alternatively, the certifying entity can issue a digital certificate that the user meets the condition, without including any reference biometric data in said certificate, such that the reference biometric data of the user will be subsequently associated with the user, as explained below.

In any of the aforementioned cases, the digital certificate issued by the certifying entity can be addressed (that is, it can be delivered) directly to the user, such that the user himself/herself can use the certificate in subsequent accesses or, more preferably, it can be addressed to a management company that is responsible for managing the user's access, as explained below.

Furthermore, the certification issued by the certifying entity identifies the user, either by indicating personal data of an official identification document (name and surname, identity number, passport number, etc.) although, more preferably, the user is identified by means of an alias, or an identification code for each user, to avoid handling official identity data of the user. In this manner, the certificate issued by the certifying entity could indicate that the user associated with a certain identification code meets a certain evaluated condition. Preferably, the certificate is sent to the management company such that, in accordance with services contracted with said management company by the user, the user can make use of the conditional access control service offered by the management company.

In accordance with the above explanation, in a first aspect, the invention relates to a conditional access method for access of a user to certain goods, services or establishments, through the biometric data of the user, depending on the compliance of the user with certain conditions required for access, wherein the method comprises the following steps:
- Generating, prior to an intended access of the user, reference biometric data of the user, which enable the user to be identified; and
- Capturing, at the time of the intended access, control biometric data, of the user, associated with the reference biometric data, that is, of the same type (fingerprint, iris pattern, facial image) as the reference biometric data;
   wherein the result of the method is the granting of access when the following three conditions are verified:
   i) A verification is carried out, by a processing unit which has access to the reference biometric data and the control biometric data, of whether the control biometric data corresponds at least in part to the reference biometric data, and the verification determines that they correspond. This verification verifies that, for example, the fingerprint of the control biometric data corresponds to (is equal to) the fingerprint of the reference biometric data.
   ii) A verification is carried out, by the processing unit, of whether data associated with an access condition of the user, which data is comprised in a digital certificate associated with the identity of the user issued by a trusted third party, coincides with the access condition of the user, and the verification determines that they coincide. This verification verifies that the condition, as certified by the digital certificate, which the user meets, is the same condition that must be met to grant access.
   iii) A verification is carried out, by the processing unit, of whether the identity of the user, verified based on the reference biometric data, coincides with the identity of the user on the digital certificate. This verification verifies that the user who provides, for example, the fingerprint of the control biometric data, has the same identity as the individual for whom the digital certificate has been issued.

In a particular embodiment, the method comprises the step of issuing an error signal from an access issuer if access is denied.

In another particular embodiment, the method comprises the step of encrypting the control biometric data, such that the verification related to the reference and the control biometric data could be carried out using the encrypted control biometric data.

Furthermore, and also in light of the foregoing explanations, in a second aspect, the invention relates to a conditional access system, in order to carry out the method described above, wherein the system comprises:
- A first memory to save, preferably permanently, the reference biometric data of the user. Therefore, the first memory is preferably a non-volatile memory.
- Capture means to capture the control biometric data of the user at the time of the intended access; and
- A processing unit, which is in communication with the first memory and with the capture means, and which is configured to execute the method described above.

The system can also include a second memory to store the control biometric data. The second memory is preferably volatile, in order to keep the information only for the time necessary to determine access.

Optionally, the system may further include an access issuer in order to issue an access indication when the processing unit determines that the intended access is granted.

According to a preferred embodiment of the invention, the system further comprises a communication device, which can be fixed, such as a PC or, more preferably, can be mobile, such as a Tablet or a mobile phone, such as a Smartphone, that incorporates, and/or is connectable to, the rest of the elements: first memory, capture means and processing unit and, where applicable, second memory and/or access issuer. More preferably, the communication device is a Smartphone, which integrates the aforementioned elements. Advantageously, the smartphone already comprises as standard the hardware elements necessary to carry out at least part of the steps of the access method described above. Furthermore, smartphones are devices that are widely accessible for the user, who usually carries one with them. Thanks to the mobile communication device, the access method can be carried out with the same mobile device in a plurality of blocked systems that are modified or suitable to be compatible with the access system. This is especially advantageous for adapting a plurality of already existing blocked systems to the access method with a minimal amount of modification. In particular, it enables the user to be the carrier of the reference biometric data, which is housed in the first memory within the mobile device, for example, the smartphone.

The first memory, which contains the reference biometric data, preferably makes up part of a simple and portable physical device wherein, once recorded, the reference biometric data cannot be manipulated by third parties. Therefore, the first memory is a non-volatile memory, while the second memory, although it may be non-volatile, is preferably volatile, such that it only stores the control biometric data in order to carry out the verification that affects the reference and the control biometric data, and only for the time necessary to carry out this verification. Smartphones are specially adapted to handle the first, non-volatile, memory, since they implement a secure area within the main processor thereof, called (for the Android operating system) TEE (Trusted Execution Environment), which is isolated from the operating system, in order to ensure that confidential information can be stored, processed and protected in an isolated and secure environment. Other operating systems implement an equivalent secure area. Therefore, TEE houses, in a secure manner, both the access control and those particularly sensitive applications, which must be run in isolation from the operating system of the terminal.

As a particular case, the access that is controlled by the device of the invention can be the access to certain blocked devices, such as, for example, tobacco vending machines; gaming machines; access barriers, etc. In this case, the system of the invention incorporates a wireless communicator, such as RFID, NFC, Wi-Fi, Bluetooth, etc., commanded by the processing unit, in order to communicate bidirectionally with the blocked device, wherein through the communicator, the system of the invention requests that the blocked device issue an identifier and, if appropriate, a password, as well as that the communicator issue an unblock signal in order to activate/unblock the blocked device.

For this embodiment, and for any other, the access indication issued by the access issuer may include a text message, light, sound, etc. indicating that access has been allowed. Additionally, the access issuer can issue a similar error indication, when the intended access is denied. The communicator can be passive, so that it is not necessary to provide a power supply that requires maintenance, and therefore more susceptible to failure. The communicator can form part of the access issuer.

Preferably, to prevent or hinder a malicious third party from accessing confidential user information, the control biometric data can be stored in the second memory once it is encrypted, although it can also be compared as-is, without prior encryption.

In a third inventive aspect, the invention provides a computer program with instructions that, when executed by processing means, executes at least the steps of the access method according to the first aspect.

In one embodiment, the computer program the execution of which is carried out by the method object of the invention is a mobile application, also called app, installed on the smartphone. The smartphone has been previously configured as an element of the access system, including the installation of the mobile application.

In a fourth inventive aspect, the invention provides a data-carrying signal containing a computer program according to the third inventive aspect. Advantageously, the computer program containing the instructions necessary to carry out the access method can be stored on the mobile device, by downloading it wirelessly from a server.

These and other features and advantages of the invention will be evident in light of the description of the preferred, but not exclusive, embodiments which is illustrated by way of non-limiting example in the drawings which are attached.

### Brief description of the drawings

Figure 1 shows an exemplary embodiment of the access system of the invention.
Figures 2A and 2B show flow charts of the method of the invention, referring to the certification (figure 2A) and the access (figure 2B).

### Detailed description of an embodiment

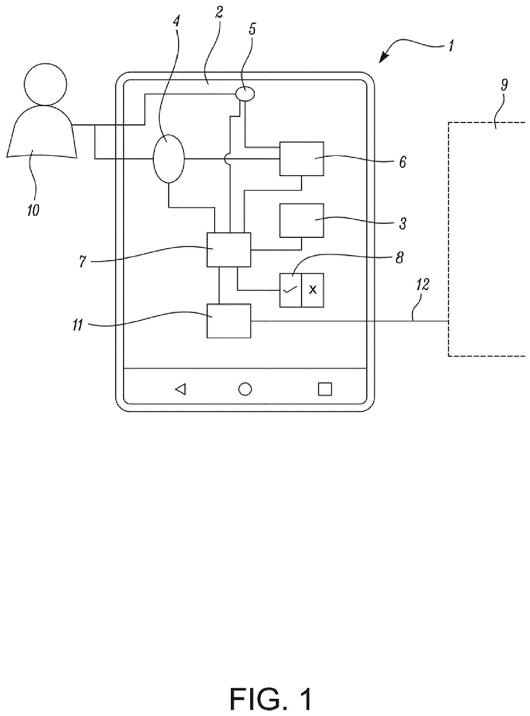

A detailed preferred exemplary embodiment of the invention is given below with the aid of the attached figures 1-2 mentioned above.

Figure 1 shows an example of the conditional access system (1) of a user (10), which comprises a smartphone (2) which in turn integrates a TEE with a first non-volatile memory (3) wherein a first file is stored containing reference biometric data, of the user (10), such as a fingerprint of the user (10), a facial image, an iris pattern, etc., previously captured, and wherein the user (10) has been previously certified by a certifying entity, which has issued a certificate according to which the user (10) verifies a certain characteristic, such as, for example, being of legal age.

The smartphone (2) also includes capture means (4, 5) to capture, at the time of the intended access, control biometric data of the user (10), which are of the same type as the reference biometric data, that is, the control and the reference biometric data are both fingerprint data, or both facial image data, or both iris pattern data, etc. The capture means (4, 5) can include a fingerprint reader (4) and/or a camera (5) configured to carry out facial recognition, or iris pattern recognition. The control biometric data is stored in a second file within a second volatile memory (6) integrated in the smartphone (2).

A processing unit (7), also integrated in the smartphone (2), which has access to the first memory (3) and to the second memory (6), and which is also in communication with the capture means (4, 5), is likewise configured to verify whether the control biometric data coincides with the reference biometric data, as well as an access issuer (8) issues a favorable access indication, such as, for example, a message, when the verification is favorable, i.e., when the processing unit (7) determines that there is correspondence between the control and the reference biometric data. Additionally, the access issuer (8) can issue a similar error indication, when the verification is not favorable.

In the represented example, the system (1) of the invention is used to control access of the user (10) to a blocked device (9), such as a tobacco vending machine.

In this case, the access issuer (8) of the access system (1) includes a wireless communicator (11), for example, by Wi-Fi, commanded by the processing unit (7), and which communicates bidirectionally with the blocked device (9), wherein through the communicator (11), the access system (1) requests that the blocked device (9) issue an identifier and, where applicable, a password, in order to access the blocked device (9), as well as the communicator (11) issues an unblock signal (12) in order to activate/unblock the blocked device (9) if the result of the comparison is favorable.

In the event that an unauthorized third party obtains the reference biometric data, for example, by stealing the smartphone (2), and reproduces the previous access steps, the capture means (4, 5) would capture control biometric data belonging to the third party, not to the user (10), that therefore would not coincide with the reference biometric data, such that the verification regarding the control and the reference biometric data, performed by the processing unit, (7), would not give a result favorable to granting access, such that the blocked device (9) would not allow access for the user (10), additionally the communicator (11) would not issue the unblock signal (12). An error indication would also optionally be issued by the access issuer (8) if the verification was unfavorable for any other reason.

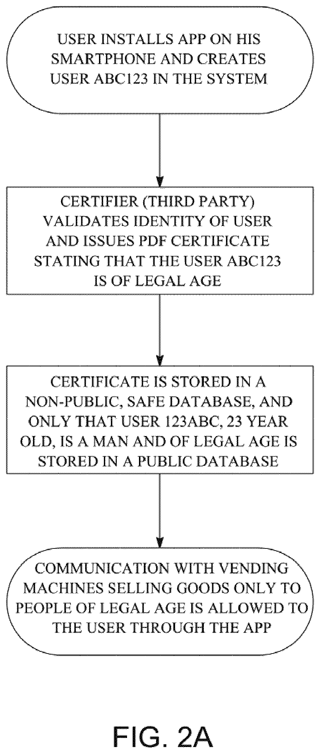

As shown in Figure 2A, prior to the use of the access system (1), the user (10) has first been certified by a certifying entity. In particular, the user (10) has contacted the certifying entity, for example, a non-governmental certifying entity, to which the user (10) provides personal information. For example, the user (10) and a representative of the certifying entity hold a face-to-face or video call interview, enabling the certifying entity to take a picture of the user's face (10), as well as have access to an official identification document of the user (10), such as the ID card, driving license, passport, etc. Based on the information provided by the user (10) to the certifying entity, the certifying entity first verifies the identity of the user (10) and then verifies if the user (10) meets a certain condition, such as being of legal age, which is the same condition that determines access, for example, to the tobacco vending machine. The verification method of the condition is applicable to other conditions, such as, for example, being recognized as a member of a large family or belonging to a certain group, etc., taking into account that said verification will require the user (10) to provide the corresponding information.

If the certifying entity verifies that the user (10) in fact meets the condition, it issues a certificate associated with the identity of the user (10), and indicates compliance with the condition. In particular, the certifying entity can generate, as a certificate, a document in PDF format indicating that the user (10), who can be identified in the certificate not by their real identity, but by a user (10) password (for example, user ABC123) meets the condition of, for example, being of legal age. The certificate may be addressed (i.e., sent) not to the user (10), but to a management company, which will use the certificate to register the user (10) and manage an access service for the user (10) to access the services, goods or establishments for which compliance with the condition of, for example, being of legal age, is required.

The management company may offer the client the access service, though, for example, an app that includes the computer code necessary to carry out the steps of the conditional access method of the invention. The user (10) can download the app on their smartphone (2), for example, wirelessly, from a server, and run said app from the smartphone (2).

For example, the management company, once the certificate has been received from the certifying entity, creates a registration record of the user (10) (or, more preferably, updates a previously created one), and enters the certificate, or a mention to said certificate, into the record. According to an example, the record of the user (10) identifies the user (10), not by means of official data of the identity of the user (10), but by means of a user code, for example, ABC123. The record of the user (10) further contains information to log into the app, such as, for example, an email address and a password for accessing the app. In this case, the management company can save, in a public database, the user code and an indication that it is certified, and it can save the information to log into the app and the certificate in a private database. If the management company bills the user (10) for the services, it can save the billing data of the user (10) in the private database.

The management company may contact the user (10) to request the user (10) to take the reference biometric data using the smartphone (2), so that it is stored in the first file, in the event that the smartphone (2) does not already have said reference biometric data, which could be the case, for example, if the user (10) uses the fingerprint to unlock the smartphone (2). According to an example, this contact can be made through the app the first time the user (10) connects to the app.

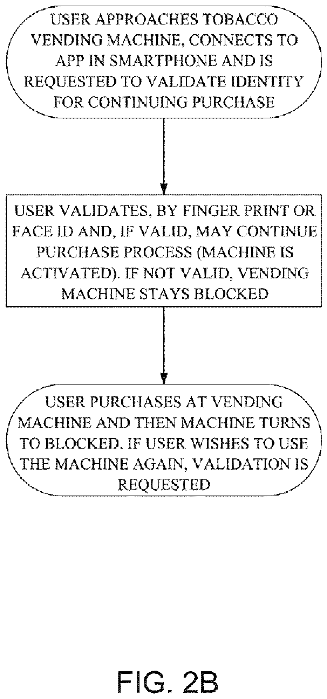

Once the user (10) is certified, he/she is registered by the management company and the app is made available, i.e., pertinent verifications have been made that the identity of the user (10) as established in the certificate matches the identity of the user (10) that provides the control biometric data, the user (10) can now use the app to manage their access to establishments, blocked devices (9), web pages, gaming rooms, etc. that require the certified condition to be met, for example, being of legal age, as explained above for the blocked device (9), such as the tobacco vending machine, as illustrated in figure 2B.

According to an example, when the user (10) logs into the app, the app can show nearby blocked devices (9) that they can access, and start a selection dialogue prior to the intended access explained above. Subsequently, the user (10) takes the control biometric data, using the capturer (4, 5) of the smartphone, and the verifications continue as explained above. The access determination can end, according to the example explained above, when the app grants the user (10) access to the blocked device (9), such as the tobacco vending machine. More preferably, the app can be connected to the blocked device (9) itself, preferably through the cloud, to enable the app to manage the sales process and, if appropriate, use data for statistics, such as the age and sex of the user (10), saved in the public or private database.

Due to this certification process of the user by a certifying entity, it prevents confidential information of the user (10) from being stored in databases exposed to potential attacks or without control of the user (10).

## Claims

1. A conditional access method of a user (10), which includes the steps of:
- generating, prior to an intended access of the user (10), reference biometric data, of the user (10), which enable the user (10) to be identified; and
- capturing, at the time of the intended access, control biometric data, of the user (10), associated with the reference biometric data;
the method being **characterized in that** it includes an additional step of granting access to the user (10) only when all the following conditions are met:
-i) a verification is carried out, by a processing unit (7) which has access to the reference biometric data and the control biometric data, of whether the control biometric data corresponds at least in part to the reference biometric data, and the verification determines that they correspond;
-ii) a verification is carried out, by the processing unit (7), of whether data associated with an access condition of the user (10), which is comprised in a digital certificate associated with the identity of the user (10) issued by a trusted third party, coincides with the access condition of the user (10), and the verification determines that they coincide; and
-iii) a verification is carried out by the processing unit (7) of whether the identity of the user (10), verified based on the reference biometric data, coincides with the identity of the user (10) on the digital certificate, and the verification determines that they coincide.

2. The method according to claim 1, which includes an additional step of issuing an error signal when the control biometric data does not correspond to the reference biometric data.

3. The method according to any of claims 1-2, wherein the controlled access is an access of the user (10) to a blocked device (9), the method including an additional step of communicating bidirectionally with the blocked device (9) which in turn includes the steps of:
- requesting that the blocked device (9) issue an identifier and, if appropriate, a password, in order to access the blocked device (9), and
- issuing an unblock signal (12) in order to activate/unblock the blocked device (9).

4. The method according to any of claims 1-3, further comprising a step of storing the reference biometric data in a first memory (3) accessible by the processing unit (7), and/or storing the control biometric data in a second memory (6) accessible by the processing unit (7).

5. The method according to any of claims 1-4, which includes an additional step of encrypting the control biometric data.

6. The method according to any of claims 1-5, wherein the reference biometric data is in the possession of the user (10).

7. The method according to any of claims 1-6, wherein the verification of step i) determines that the biometric data coincides when it has a degree of correspondence higher than a predetermined threshold value, which preferably depends on the type of the reference and the control biometric data.

8. A conditional access system (1) of a user (10), the system (1) comprising:
- the first memory (3) containing the reference biometric data; and
- capture means (4, 5) to capture the control biometric data at the time of the intended access;
the system being **characterized in that** it further comprises a processing unit (7), in communication with the first memory (3) and with the capture means (4, 5), and that is configured to carry out the method of any of claims 1-7.

9. The system (1) according to claim 8, which further comprises a communication device (2), which incorporates, and/or is connectable to, at least the first memory (3), the capture means (4, 5) and the processing unit (7).

10. The system (1) according to claim 9, wherein the communication device (2) is mobile, preferably a smartphone (2), and includes the first memory (3), the capture means (4, 5) and the processing unit (7).

11. The system (1) according to any of claims 8-10, wherein the capture means (4, 5) comprise a fingerprint reader (4) and/or a camera (5) configured to carry out facial recognition or iris recognition.

12. The system (1), according to any of claims 8-11, further comprising a wireless communicator (11), commanded by the processing unit (7), in order to communicate bidirectionally with the blocked device (9) to which the user (10) wishes to have access, the communicator (11) being configured to request that the blocked device (9) issue an identifier and, if appropriate, a password, in order to access the blocked device (9), and to issue an unblock signal (12) in order to activate/unblock the blocked device (9).

13. The system (1) according to any of claims 8-12, which additionally includes an access issuer (8), in communication with the processing unit (7), in order to issue an access indication signal when access is granted.

14. A computer program with a series of instructions that when executed by processing means carry out the steps of the method according to any of claims 1-7.

15. A data carrier signal containing a computer program according to claim 14.
